(19) Europäisches Patentamt
European Patent Office
Office européen des brevets

(11) **EP 4 597 861 A1**

(12) **EUROPEAN PATENT APPLICATION**
published in accordance with Art. 153(4) EPC

(43) Date of publication:
06.08.2025 Bulletin 2025/32

(21) Application number: 23909864.3

(22) Date of filing: 27.11.2023

(51) International Patent Classification (IPC):
*H04B 7/0456* (2017.01)

(52) Cooperative Patent Classification (CPC):
H04B 7/0456; H04B 7/06

(86) International application number:
PCT/CN2023/134450

(87) International publication number:
WO 2024/139933 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.12.2022 CN 202211695332

(71) Applicant: ZTE Corporation
Shenzhen, Guangdong 518057 (CN)

(72) Inventors:
• YU, Hongkang
Shenzhen, Guangdong 518057 (CN)

• CHEN, Yijian
Shenzhen, Guangdong 518057 (CN)
• ZHANG, Shujuan
Shenzhen, Guangdong 518057 (CN)
• JIAN, Mengnan
Shenzhen, Guangdong 518057 (CN)
• SI, Yuan
Shenzhen, Guangdong 518057 (CN)
• WANG, Yunlu
Shenzhen, Guangdong 518057 (CN)

(74) Representative: Ziebig Hengelhaupt Intellectual
Property Attorneys
Patentanwaltskanzlei PartGmbB
Leipziger Straße 49
10117 Berlin (DE)

(54) **CHANNEL INFORMATION FEEDBACK METHODS AND APPARATUSES, AND COMPUTER READABLE STORAGE MEDIUM**

(57) The embodiments of the present application relate to the technical field of communications. Provided are channel information feedback methods and apparatuses, and a computer readable storage medium, which can accurately feed back channel information in a scenario of near-field UE. A method comprises: performing channel measurement to obtain channel information; according to the channel information, determining a target code word from a code word set, wherein at least one code word element of at least one code word in the code word set is determined according to a high-degree polynomial of an index; and feeding back indication information of the target code word. The present application can be applied to the process of wireless communications.

FIG. 3

**Description**

This application claims a priority to Chinese Patent Application No. 202211695332.7, filed on December 28, 2022, which is incorporated in this application by reference in its entirety.

TECHNICAL FIELD

The present disclosure relates to the field of communication technology, and in particular, to a channel information feedback method, an apparatus device and a computer readable storage medium.

BACKGROUND

A hyper-scale multi-input multi-output (MIMO) system is regarded as a key technology to improve a capacity of next-generation mobile communication networks, and accurate feedback of channel information is very important to the transmission performance of the MIMO system.

Currently, a feedback scheme of channel information in the MIMO system is mainly set based on a case where a first node (e.g., user equipment (UE)) is located outside a near field (i.e., a far field) of an antenna array of a second node (e.g., base station). As a number of users of the MIMO system increases, a size of the antenna array of the second node becomes larger and larger, resulting in an increase in a range of the near field. Therefore, there is a case where a large number of UEs are located within the range of the near field. For a near-field UE, the accuracy of channel information feedback in the current scheme is low, which will affect the transmission performance of the MIMO system.

SUMMARY

The embodiments of the present disclosure provide a channel information feedback method, an apparatus, and a computer readable storage medium, which may accurately feed back channel information in a scenario of near-field UE.

In an aspect, there is provided a channel information feedback method, including: performing channel measurement to acquire channel information; determining a target codeword from a codeword set according to the channel information, where at least one codeword element of at least one codeword in the codeword set is determined according to a higher-degree polynomial of an index, and the target codeword is used to characterize the channel information; and feeding back indication information of the target codeword.

In another aspect, there is provided a channel information feedback method, including: receiving indication information, where the indication information is used to indicate a target codeword in a codeword set and characterizing the channel information, and at least one codeword element of at least one codeword in the codeword set is determined based on a higher-degree polynomial of an index; and determining the target codeword based on the indication information.

In yet another aspect, there is provided a channel information feedback apparatus, including: an acquiring module, a determining module and a feedback module. The acquiring module is configured to perform channel measurement to acquire channel information. The determining module is configured to determine a target codeword from a codeword set according to the channel information, where at least one codeword element of at least one codeword in the codeword set is determined according to a higher-degree polynomial of an index. The feedback module is configured to feed back indication information of the target codeword.

In some embodiments, the higher-degree polynomial of the index includes a linear monomial of the index and a quadratic monomial of the index.

In some embodiments, the higher-degree polynomial of the index includes a linear monomial of the index, a quadratic monomial of the index, and a cubic monomial of the index.

In some embodiments, the index includes a first index and/or a second index.

In some embodiments, the higher-degree polynomial of the index includes: a higher-degree monomial constructed by the first index and the second index.

In yet another aspect, there is provided a channel information feedback apparatus, including: a receiving module and a determining module. The receiving module is configured to receive indication information, where the indication information is used to indicate a target codeword of a codeword set characterizing channel information, and at least one codeword element of at least one codeword in the codeword set is determined according to a higher-degree polynomial of an index. The determining module is configured to determine the target codeword according to the indication information.

In yet another aspect, there is provided a communication apparatus, including: a memory and a processor. The memory and the processor are coupled. The memory is configured to store computer programs that, upon being executed by the processor, implement the channel information feedback method described in any of the above embodiments.

In yet another aspect, there is provided a computer readable storage medium. The computer readable storage medium stores computer program instructions that, upon being executed by a processor, implement the channel information feedback method described in any of the above embodiments.

In yet another aspect, there is provided a computer program product. The computer program product includes computer program instructions that, upon being executed by a processor, implement the channel information feedback method described in any of the above embodiments.

In the channel information feedback method provided in the embodiments of the present disclosure, the first node, after acquiring the channel information, determines the target codeword that characterizes the channel information from the codeword set and feeds back the target codeword to the second node. Herein, at least one codeword element of at least one codeword in the codeword set is determined according to the higher-degree polynomial of the index. By using the higher-degree polynomial to construct the codeword element, in a scenario of near-field UE, a relationship between a phase of the codeword element and an index may be accurately reflected, thus a high correlation between the codeword and the channel information is ensured, and further, accurate feedback of the channel information in the scenario of near-field UE is realized.

## BRIEF DESCRIPTION OF THE DRAWINGS

In order to describe technical solutions in the present disclosure more clearly, the drawings to be used in some embodiments of the present disclosure will be introduced briefly. Obviously, the drawings described below are merely drawings of some embodiments of the present disclosure, and for those ordinary in the art, other drawings can be obtained according to these drawings.

FIG. 1 is a schematic diagram of correlation varying with a distance provided by some embodiments of the present disclosure.
FIG. 2 is a schematic diagram of a communication network architecture provided by some embodiments of the present disclosure.
FIG. 3 is a flow schematic diagram of a channel information feedback method provided by some embodiments of the present disclosure.
FIG. 4 is a structural schematic diagram of a channel information feedback apparatus provided by some embodiments of the present disclosure.
FIG. 5 is a structural schematic diagram of another channel information feedback apparatus provided by some embodiments of the present disclosure.
FIG. 6 is a structural schematic diagram of a communication apparatus provided by some embodiments of the present disclosure.

## DETAILED DESCRIPTION

The technical solutions in the present disclosure will be described below clearly and completely in conjunction with the drawings in the embodiments of the present disclosure. Obviously, the described embodiments are merely some but not all of the embodiments of the present disclosure. All other embodiments obtained based on the embodiments of the present disclosure by those ordinary in the art without paying any creative effort shall be included in the protection scope of the present disclosure.

It should be noted that in the present disclosure, term such as "exemplary" or "for example" is used to present an example, an illustration, or an explanation. Any embodiment or design solution described herein with "exemplary" or "for example" in the present disclosure is not necessarily to be construed as preferred or advantageous over other embodiments or design solutions. Rather, the usage of term such as "exemplary" or "for example" is intended to present relevant concepts in a specific manner.

Hereinafter, the terms "first", "second", etc., are used for descriptive purposes only and are not to be construed as indicating or implying relative importance or implicitly indicating a number of indicated technical features. Thus, a feature defined with "first" and "second", etc., may explicitly or implicitly include one or more of such features.

In the description of the present disclosure, unless otherwise specified, the symbol "/" means "or", for example, "A/B" may mean A or B. "And/or" describes an association relationship between associated objects, which represents that there may be three kinds of relationships. For example, A and/or B may represent three cases: only A, both A and B, or only B. In addition, "at least one" means one or more, and "a/the of plurality" means two or more.

In a wireless communication system, a first node and a second node are usually configured with a plurality of antennas respectively to form a MIMO system, and a signal transmission rate is improved by using spatial division multiplexing technology. In order to ensure transmission performance, the second node needs to precode a transmission signal based on channel information fed back by the first node. Therefore, the accuracy of channel information feedback is particularly important. In addition, in a MIMO system in a multi-user scenario, the accuracy of channel information feedback is required to be higher.

**EP 4 597 861 A1**

Here, the first node may be a base station or a terminal, and the second node may also be a base station or a terminal. The present disclosure is illustrated exemplarily by taking the first node as a UE and the second node as a base station.

In the field of wireless communication, acquisition of channel information is mainly based on codeword feedback, and accuracy of acquiring the channel information greatly depends on a design of the codeword. A basic principle of the codeword feedback is briefly introduced below. By taking single-stream transmission as an example, assuming that feedback channel capacity is B bps/Hz, a number of available codewords in a codeword set is $G = 2^B$, and the codeword set $C = \{c_1, c_2, ... c_G\}$ is stored by the first node and the second node jointly. The first node obtains channel information (e.g., a channel matrix) by measuring a pilot signal, selects a codeword $c_g$ from the codeword set that best matches the channel information, and feeds back a codeword number g to the second node. Herein, the codeword number g is also known as a precoding matrix indicator (PMI). The second node obtains a corresponding codeword $c_g$ from the codeword set according to the codeword number g fed back by the first node, and thus obtains the channel information corresponding to the first node.

Characteristics of the channel information are determined by properties of electromagnetic waves, and a relative phase relationship of the channel information is determined by a wave path difference of the electromagnetic waves emitted by the base station to reach each unit of a receiving antenna. Existing codeword sets are designed based on an assumption that the UE is located in a far field of an antenna array, and in such case, an electromagnetic wave reaching the first node in a certain direction may be regarded as a plane wave, so a phase of each unit in the designed codeword has a linear relationship with an antenna index.

Massive MIMO is a core technology of the 5th generation mobile communication technology (5G) communication system, which is characterized by configuring a large number of antennas at the second node. Combined with multi-user MIMO technology, the second node may multiplex a plurality of users under a same spectrum resource (i.e., the plurality of users use a same shared channel). Generally, a ratio of a number of the antennas to a number of the multiplexed users is maintained at about 5-10 times. In order to multiplex more users and further improve spectrum efficiency, a scale of the antenna array will be further increased.

However, as the scale of the antenna array increases, probability of the UE appearing in the near field increases greatly, and the specific analysis is as follows.

According to classical theory, a near-field range of the antenna array may be expressed as:

$$ r < \frac{2D^2}{\lambda} $$

where D represents a maximum size of the antenna array, and $\lambda$ represents a wavelength of a working electromagnetic wave. Take a 100*100 antenna array as an example, assuming that an operating frequency of the second node is 30 GHz, and at this time, an area within r<100 meters may be regarded as the near field of the antenna array. It can be seen that a size of the near field is positively correlated with the size of the antenna array. Therefore, as the size of the antenna array increases, the range of the near field also becomes larger, resulting in a great increase in the probability of the UE appearing in the near field.

For a scenario where the UE is located in the near field, the electromagnetic wave to reach the antenna array of the first node may no longer be regarded as a plane wave, so using existing codebooks will lead to insufficient accuracy of feedback channel information, thus the transmission performance of the MIMO system is affected. An example is given below: it is considered that a uniform linear array (ULA) includes 128 elements (ports), and an angle between an electromagnetic wave directed toward the UE and the antenna array is 0 degrees. For a far-field scenario, only a line of sight (LoS) path is considered, and the UE may accurately characterize the channel information by feeding back an all-1 vector, i.e., correlation between the channel information and the feedback codeword is 1. However, for a near-field channel, correlation between a codeword and channel information of the near-field channel decreases rapidly as a distance between the first node and the antenna array of the second node decreases, which reflects that the second node cannot acquire accurate channel information based on the feedback codeword.

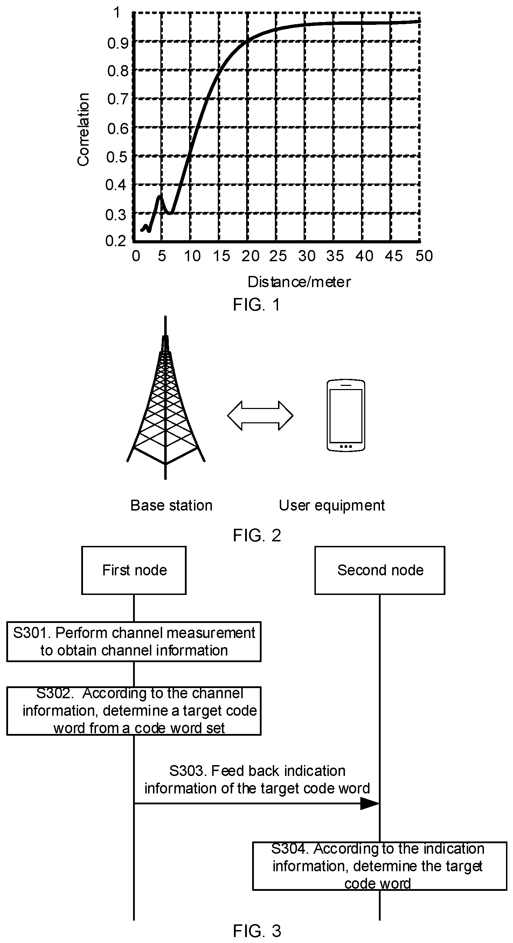

For example, FIG. 1 is a schematic diagram of correlation varying with distance provided by the embodiments of the present disclosure. As shown in FIG. 1, the horizontal axis represents a distance between the first node and the antenna array of the second node, and the vertical axis represents a correlation between the channel information and the feedback codeword. It can be seen that the smaller the distance between the first node and the antenna array of the second node is, the smaller the correlation is. The larger the distance, the closer the correlation is to 1.

A root cause of the above problem is that in the scenario of near-field UE, a predefined codeword does not match the channel information in the near-field environment, and the relationship between the phase of each element (codeword unit) in the codeword and the antenna index cannot be reflected.

A reason for the above problem is that, in the scenario of near-field UE, the phase of the codeword element and the antenna index no longer presents a linear relationship, but a higher-degree polynomial relationship. Based on this, the embodiments of the present disclosure provide a channel information feedback method. In a codeword set used by the method, at least one codeword element of at least one codeword is determined according to a higher-degree polynomial of the antenna index, and a target codeword selected from the codeword set may accurately feed back channel information in the scenario of near-field UE.

FIG. 2 is a structural diagram of a communication system provided by the embodiments of the present disclosure. As shown in FIG. 2, the communication system includes a base station and a UE. Here, the base station and the UE may be connected through a wired network or a wireless network. Herein, the wired network or the wireless network may include a router, a switch, or other devices for facilitating communication between the base station and the UE, which is not limited by the embodiments of the present disclosure.

In some embodiments, the base station is configured to provide wireless access services for the UE. Specifically, a single base station provides a single service coverage area (which is also known as a cell). The UE entering the area may communicate with the base station through wireless signals, so as to accept wireless access services provided by the base station. In addition, the service coverage area of the base station may also be divided into a near field and a far field, and the UE may be within a range of the near field or a range of the far field.

In some embodiments, the base station may be an evolution nodeB (eNB), a next generation nodeB (gNB), a transmission receive point (TRP), a transmission point (TP), and some other access nodes. According to a size of the provided service coverage area, the base station may be categorized into a macro base station for providing a macro cell, a pico base station for providing a pico cell and a femto base station for providing a femto cell. With continuous evolution of the wireless communication technology, future base stations may also adopt other names.

In some embodiments, the UE may be a device with a wireless transceiver function, such as a mobile phone, a tablet computer, a wearable device, a vehicle-mounted device, an augmented reality (AR)/virtual reality (VR) device, a notebook computer, an ultra-mobile personal computer (UMPC), a netbook, or a personal digital assistant (PDA). a specific type of the user equipment is not limited by the embodiments of the present invention.

It should be understood that FIG. 2 is an exemplary structural diagram, and a number of devices included in the communication system shown in FIG. 2 is not limited. For example, a number of base station(s) is not limited and a number of the UE(s) are not limited. And, in addition to the devices shown in FIG. 2, the communication system shown in FIG. 2 may further include other devices, which is not limited thereto.

FIG. 3 is a flow schematic diagram of a channel information feedback method provided by the embodiments of the present disclosure. For example, the channel information feedback method provided in the present disclosure may be applied to an application environment shown in FIG. 2.

As shown in FIG. 3, the channel information feedback method provided by the present disclosure may specifically include the following steps S301 to S304.

In S301, a first node performs channel measurement to acquire channel information.

In some embodiments, the first node may perform channel measurement to acquire channel information. For example, a second node may send a pilot signal to the first node, and, for example, the pilot signal is a channel state information-reference signal (CSI-RS). Based on the pilot signal, the first node may perform the channel measurement at its resource location relative to the second node to acquire the channel information. For a specific channel measurement flow, please refer to related technologies, which will not be repeated in detail in the embodiments of the present disclosure.

In some embodiments, the above channel information may be in a form of a matrix/vector.

In S302, the first node determines a target codeword from a codeword set according to the channel information.

Herein, at least one codeword element of at least one codeword in the codeword set is determined according to a higher-degree polynomial of an index. The codeword set includes one or more codewords, and each codeword is in the form of a matrix/vector. The target codeword is used to characterize the channel information. The embodiments of the present disclosure are described by taking an example where the index is an antenna index, where the antenna index may be determined by a number of transmitting antennas.

A polynomial is an algebraic expression composed of a sum of several monomials. Herein, each monomial includes a variable and/or a coefficient, and a degree of the variable in the monomial determines a degree of the monomial. In the embodiments of the present disclosure, the antenna index is the variable in the monomial.

A degree of the polynomial is determined by a highest degree of a monomial in the polynomial. For example, if the polynomial includes a linear monomial and a quadratic monomial, then the polynomial is a quadratic polynomial. In addition, a higher-degree polynomial refers to a polynomial with a degree greater than 1, such as a quadratic polynomial or a cubic polynomial.

In some embodiments, the first node and the second node agree a same codeword set, or a same codeword generation model, to generate the codeword set. The first node, after acquiring the channel information, may determine the target codeword (which is also known as a selected codeword) from the pre-agreed codeword set based on the channel information.

It should be noted that the specific way of determining the selected codeword is not limited by the embodiments of the present disclosure. As an example, the channel information is a matrix/vector, and the codeword is also a matrix/vector. For each codeword in the codeword set, a minimum chordal distance between the codeword and the channel matrix/vector may be calculated, and a codeword corresponding to a result with a minimum chordal distance may be determined as the selected codeword. Or, for each codeword in the codeword set, a signal-to-interference-and-noise ratio achieved by using the codeword as a precoding matrix may be calculated, and a codeword corresponding to a result with a maximum signal-to-interference-and-noise ratio may be determined as the selected codeword.

The method for determining the codeword in the codeword set is described in detail below in conjunction with specific embodiments.

In a possible implementation, the second node is configured with a uniform linear array (ULA) including $N_t$ transmitting antennas, and may send CSI-RS pilots with a total of $N_t$ ports for the first node to perform channel measurement. The first node is configured with $N_r$ receiving antennas, and performs detection based on the CSI-RS pilots at its own resource position to acquire a channel matrix of $N_t \times N_r$ dimension.

The second node and the first node construct a codeword by using the pre-agreed codeword generation model. As an example, in the codeword generation model, a generation expression of a codeword element is as follows:

$$\frac{1}{\sqrt{N_t}} e^{j\pi M}$$

Herein, M is a higher-degree polynomial of the antenna index. It should be noted that the antenna index n is determined by the number $N_t$ of the transmitting antennas. For example, a value of the antenna index n may be expressed as $n \in \{0, 1 \dots, N\}$, where N is an integer less than $N_t$. That is, the value of the antenna index n ranges from 0 to $N_t$ - 1, or any sub-interval between 0 and $N_t$ - 1, where a specific configuration may be determined according to actual scenario requirements, which is not limited by the embodiments of the present disclosure.

Descriptions will be made below by taking an example where the higher-degree polynomial of the antenna index is a quadratic polynomial or a cubic polynomial. Herein, relevant description of the quadratic polynomial is shown in the following embodiment 1, and relevant description of the cubic polynomial is shown in the following embodiment 2.

Embodiment 1: a higher-degree polynomial for constructing an index of a codeword includes: a linear monomial of the index and a quadratic monomial of the index.

In this embodiment, an input parameter set of the higher-degree polynomial of the antenna index may be expressed as $\{u_{1,g}, u_{2,g}, n, n^2\}$, where $g \in \{1, 2 \dots, G\}$, g is a number of the aforementioned codeword, and G is a size of a candidate set of the input parameter set, i.e., a number of codewords in the codeword set. $u_{1,g}, u_{2,g}$ are codeword generation parameters, and input parameter sets corresponding to codeword generation parameters with different values correspond to a group of candidate sets for an input parameter set. The codeword generation parameters may be fed back to the second node as indication information of a certain codeword.

Herein, the codeword generation parameters $u_{1,g}, u_{2,g}$ may be determined by the number $N_t$ of the transmitting antennas. As an example, quantization expressions of the codeword generation parameters are as follows:

$$u_{1,g} = -1 + \frac{2l}{N_t}, l = 0, 1, \dots N$$

$$u_{2,g} = -1 + \frac{k}{N_t^2}, k = 0, 1, \dots N$$

It can be understood that when $l$ and $k$ form different combinations, the calculated codeword generation parameters $u_{1,g}, u_{2,g}$ are different, and then, the further calculated codewords are also different. Therefore, the combination of different parameters $l$ and $k$ corresponds to different codewords in the codeword set, and the combination of different parameters $l$ and $k$ may be used as an index of the codeword, and has a one-to-one correspondence with the codeword number g. For example, (0, 0) corresponds to 1, (0, 1) corresponds to 2, and so on.

In some embodiments, the index of the codeword (($l, k$) or g) may be fed back to the second node as the indication information of the codeword.

The higher-degree polynomial M of the antenna index finally constructed by using the above input parameter set $\{u_{1,g}, u_{2,g}, n, n^2\}$ may be expressed as $u_{1,g}n + u_{2,g}n^2$. Then a generation expression of a codeword element is as follows:

$$\frac{1}{\sqrt{N_t}} e^{j\pi(u_{1,g}n + u_{2,g}n^2)}$$

Taking n ∈ {0,1 ... , $N_t$ - 1} as an example, the resulting generated codeword $c_g$ may be expressed as follows by substituting different values of n into the generating expression of the codeword element:

$$c_g = \frac{1}{\sqrt{N_t}} \left[ 1, e^{j\pi(u_{1,g} + u_{2,g})}, e^{j\pi(2u_{1,g}n + 4u_{2,g})} \dots, e^{j\pi(u_{1,g}(N_t-1) + u_{2,g}(N_t-1)^2)} \right]^T$$

Embodiment 2: the higher-degree polynomial for constructing the index of the codeword includes: a linear monomial of the index, a quadratic monomial of the index, and a cubic monomial of the index.

In this embodiment, an input parameter set of the higher-degree polynomial of the antenna index may be expressed as {$u_{1,g}$, $u_{2,g}$, $u_{3,g}$, n, $n^2$, $n^3$}, where g ∈ {1,2 ..., G}, and G is a size of a candidate set of the input parameter set, i.e., a number of codewords in the codeword set. $u_{1,g}$, $u_{2,g}$, $u_{3,g}$ are codeword generation parameters, which may be fed back to the second node as the indication information of a certain codeword.

Herein, the codeword generation parameter $u_{1,g}$ may be determined by the number $N_t$ of transmitting antennas, and the codeword generation parameters $u_{2,g}$, $u_{3,g}$ may be determined by $u_{1,g}$. As an example, quantization expressions of the codeword generation parameters are as follows:

$$u_{1,g} = -1 + \frac{2l}{N_t}, l = 0,1, \dots N$$

$$t = \frac{k}{N_t^2}, k = 0,1, \dots N$$

$$u_{2,g} = (1 - u_{1,g}^2)t$$

$$u_{3,g} = 2(u_{1,g}^3 - u_{1,g})t^2$$

Similarly, the combination ($l$, $k$) constructed by the above parameters $l$ and $k$ has a one-to-one correspondence with the codeword number g. The index of the codeword (($l,k$) or g), i.e., the aforementioned PMI, may be fed back to the second node as the indication information of the codeword.

The higher-degree polynomial M of the antenna index finally constructed by using the above input parameter set {$u_{1,g}$, $u_{2,g}$, $u_{3,g}$, n, $n^2$, $n^3$} may be expressed as $u_{1,g}n + u_{2,g}n^2 + u_{3,g}n^3$. Then a generation expression of a codeword element is as follows:

$$\frac{1}{\sqrt{N_t}} e^{j\pi(u_{1,g}n + u_{2,g}n^2 + u_{3,g}n^3)}$$

Taking n ∈ {0,1 ... , $N_t$ - 1} as an example, a resulted generated codeword $c_g$ may be expressed as follows by substituting different values of n into the generating expression of the codeword element:

$$c_g = \frac{1}{\sqrt{N_t}} \left[ 1, e^{j\pi(u_{1,g} + u_{2,g} + u_{3,g})}, \dots, e^{j\pi(u_{1,g}(N_t-1) + u_{2,g}(N_t-1)^2 + u_{3,g}(N_t-1)^3)} \right]^T$$

Descriptions will be made below by taking an example where the higher-degree polynomial of the antenna index includes a first index and/or a second index. For specific description, see embodiment 3 below.

Embodiment 3: in another possible implementation, the transmitting antennas configured for the second node are a uniform planar array (UPA). Herein, a number of antennas in a horizontal direction is $N_x$, and a number of antennas in a vertical direction is $N_y$. The second node may send CSI-RS pilots with $N_t = N_x \times N_y$ ports for channel measurement. The first node is configured with $N_r$ receiving antennas, and performs detection based on the CSI-RS pilots at its own resource position to acquire a channel matrix of $N_t \times N_r$ dimension.

In this embodiment, there are two antenna indexes $n_x$ and $n_y$ in dimensions of the horizontal direction and the vertical direction, respectively, and descriptions will be made by taking an example where the first index is the antenna index $n_x$ in the horizontal direction and the second index is the antenna index $n_y$ in the vertical direction. Herein, the first index $n_x$ is determined by the number $N_x$ of the antennas in the horizontal direction, and the second index $n_y$ is determined by the number $N_y$ of the antennas in the vertical direction. For example, a value of the first index $n_x$ may be expressed as $n_x \in \{0,1...N_1\}$, and $N_1$ is an integer less than $N_x$. A value of the second index $n_y$ may be expressed as $n_y \in \{0,1...N_2\}$, and $N_2$ is an integer less than $N_y$. That is, the value of the first index $n_x$ ranges from 0 to $N_x$ - 1, or any sub-interval between 0 and $N_x$ - 1, and the value of the second index $n_y$ ranges from 0 to $N_y$ - 1, or any sub-interval between 0 and $N_y$ - 1. A specific configuration may be determined according to actual scenario requirements, which is not limited by the embodiments of the present disclosure.

In this embodiment, taking the higher-degree polynomial as a quadratic polynomial as an example, an input parameter set of the higher-degree polynomial of the antenna index may be expressed as

$$\{u_{1,g}, u_{2,g}, v_{1,g}, v_{2,g}, n_x, n_x^2, n_y, n_y^2\}$$

, where $g \in \{1,2 ..., G\}$, and G is a size of a candidate set of the input parameter set, i.e., a number of codewords in the codeword set. $u_{1,g}$, $u_{2,g}$, $v_{1,g}$, $v_{2,g}$ are codeword generation parameters, which may be fed back to the second node as the indication information of a certain codeword.

Herein, the codeword generation parameters $u_{1,g}$, $u_{2,g}$ may be determined by the number $N_x$ of the transmitting antennas in the horizontal direction, and the codeword generation parameters $v_{1,g}$, $v_{2,g}$ may be determined by the number $N_y$ of the transmitting antennas in the vertical direction. As an example, quantization expressions of the codeword generation parameters are as follows:

$$u_{1,g} = -1 + \frac{2l_x}{N_t}, l_x = 0,1,...N_1$$

$$u_{2,g} = -1 + \frac{k_x}{N_t^2}, k_x = 0,1,...N_1$$

$$v_{1,g} = -1 + \frac{2l_y}{N_t}, l_y = 0,1,...N_2$$

$$v_{2,g} = -1 + \frac{k_y}{N_t^2}, k_y = 0,1,...N_2$$

Herein, the combination $(l_x, k_x, l_y, k_y)$ constructed by the above parameters $l$ and $k$ has a one-to-one correspondence with g. For example, $(0, 0, 0, 0)$ corresponds to 1, $(0, 0, 0, 1)$ corresponds to 2, and so on. An index of the target codeword $((l_x, k_x, l_y, k_y)$ or g) characterizing the channel information may be fed back to the second node as the indication information of the target codeword.

The higher-degree polynomial M of the antenna index finally constructed by using the above input parameter set $\{u_{1,g}, u_{2,g}, v_{1,g}, v_{2,g}, n_x, n_x^2, n_y, n_y^2\}$ may be expressed as $u_{1,g}n_x + u_{2,g}n_x^2 + v_{1,g}n_y + v_{2,g}n_y^2$, and then a generation expression of a codeword element is as follows:

$$\frac{1}{\sqrt{N_t}} e^{j\pi\left(u_{1,g}n_x + u_{2,g}n_x^2 + v_{1,g}n_y + v_{2,g}n_y^2\right)}$$

Taking $n_x \in \{0,1 ... , N_t - 1\}$, $n_y \in \{0,1 ... , N_t - 1\}$ as an example, different $n_x$ and $n_y$ are introduced, and a resulted generated codeword $c_g$ may be expressed as follows by substituting different values of $n_x$ and $n_y$:

$$\frac{1}{\sqrt{N_t}}\left[\begin{array}{ccc}
1 & e^{j\pi\left(u_{1,g}+u_{2,g}\right)} & e^{j\pi\left(2u_{1,g}+4u_{2,g}\right)} \\
e^{j\pi\left(v_{1,g}+v_{2,g}\right)} & e^{j\pi\left(u_{1,g}+u_{2,g}+v_{1,g}+v_{2,g}\right)} & e^{j\pi\left(2u_{1,g}+4u_{2,g}+v_{1,g}+v_{2,g}\right)} \\
e^{j\pi\left(2v_{1,g}+4v_{2,g}\right)} & e^{j\pi\left(u_{1,g}+u_{2,g}+2v_{1,g}+4v_{2,g}\right)} & e^{j\pi\left(2u_{1,g}+2u_{2,g}+2v_{1,g}+4v_{2,g}\right)} \\
\vdots & \vdots & \vdots \\
e^{j\pi\left(v_{1,g}(N_y-1)+v_{2,g}(N_y-1)^2\right)} & e^{j\pi\left(u_{1,g}+u_{2,g}+v_{1,g}(N_y-1)+v_{2,g}(N_y-1)^2\right)} & e^{j\pi\left(2u_{1,g}+4u_{2,g}+v_{1,g}(N_y-1)+v_{2,g}(N_y-1)^2\right)}
\end{array}\right.$$

$$\left.\begin{array}{cc}
\cdots & e^{j\pi\left(u_{1,g}(N_x-1)+u_{2,g}(N_x-1)^2\right)} \\
\cdots & e^{j\pi\left(u_{1,g}(N_x-1)+u_{2,g}(N_x-1)^2+v_{1,g}+v_{2,g}\right)} \\
\cdots & e^{j\pi\left(u_{1,g}(N_x-1)+u_{2,g}(N_x-1)^2+2v_{1,g}+4v_{2,g}\right)} \\
\ddots & \\
\cdots & e^{j\pi\left(u_{1,g}(N_x-1)+u_{2,g}(N_x-1)^2+v_{1,g}(N_y-1)+v_{2,g}(N_y-1)^2\right)}
\end{array}\right]$$

In some other embodiments, the higher-degree polynomial of the index includes: a higher-degree monomial constructed by the first index and the second index.

In conjunction with the example in the above-described embodiment 3, a quadratic monomial included in the quadratic polynomial of the antenna index may have the following form $an_x n_y$, and a cubic monomial included in the cubic polynomial of the antenna index may specifically have the following form $an_x^2 n_y$ or $an_x n_y^2$. Herein, $a$ is a codeword generation parameter and may be determined by a number of the antennas in the horizontal direction and/or a number of the antennas in the vertical direction.

As a possible example, the higher-degree polynomial M of the antenna index may be expressed as $u_{1,g}n_x+v_{1,g}n_y + an_x n_y$.

It can be seen that the above-described embodiment 1 and embodiment 2 are described by taking the transmitting antenna as a one-dimensional linear antenna as an example, and the embodiment 3 is described by taking the transmitting antenna having two dimensions in horizontal and vertical directions as an example. The channel information feedback method provided in the embodiments of the present disclosure is also applicable to other higher-dimensional transmitting antennas, and on the basis of the above-described embodiments, it is only necessary to increase an antenna index of a new dimension.

It should be noted that the above-described embodiment 1 to embodiment 3 are described by taking an example where the degree of the higher-degree polynomial M of the antenna index is quadratic or cubic. It should be understood that the higher the degree of the higher-degree polynomial, the closer correlation between the generated codeword and the channel information is to 1, i.e., the more accurate the channel information may be fed back.

In addition, the above-described embodiment 1 to embodiment 3 are all illustrated by taking an example where the resulted generated codewords are all determined by the generation expressions based on the same codeword element. In an actual scenario, generation expressions of codeword elements at different positions in a same codeword may be inconsistent. For example, in a certain codeword, a codeword element of first bit is determined by a generated expression constructed by a linear polynomial, a codeword element of second bit is determined by a generated expression constructed by a quadratic polynomial, and a codeword element of third bit is determined by a generated expression constructed by a cubic polynomial, and so on. For another example, in a certain codeword, except for the codeword element of the first bit is determined by the generated expression constructed by the quadratic polynomial, codeword elements of other bits are determined by generated expressions constructed by a linear polynomial, which is not limited by the embodiments of the present disclosure.

For a codeword set, there may be a case where a certain codeword is constructed by a higher-degree polynomial and other codewords are constructed by linear polynomials. It should be understood that in certain specific cases, if a coefficient of a higher-degree monomial in a higher-degree polynomial is zero, the higher-degree polynomial is specifically presented in the form of a linear polynomial. For example, in combination with the above-described embodiment 2, the higher-degree polynomial M is expressed as $u_{1,g}n + u_{2,g}n^2 + u_{3,g}n^3$, if the coefficient $u_{2,g}$ and the coefficient $u_{3,g}$ are both 0, then M is specifically presented in the form of a linear polynomial ($u_{1,g}n$), which is not limited by the embodiments of the present disclosure.

It should be noted that the channel information may still be accurately characterized by exchanging a position of each codeword element in the codeword, and the feedback performance of the MIMO system will not be affected. Therefore, any transformation of the position of each codeword element in the codeword is an equivalent transformation. The positions of the codeword elements in the above codewords are merely shown by taking an example where the values of the antenna index n are arranged from small to large, and do not constitute a limitation.

It should be understood that any transformation made on the basis of the cases described in the aforementioned embodiments should be contained within the protection scope of the present disclosure.

**In** S303, the first node feeds back indication information of the target codeword.

For example, the indication information may be PMI, i.e., the index of the target codeword. Or, the indication information may also be a generation parameter of the codeword, such as $u_{1,g}$, $u_{2,g}$ in the aforementioned S302. This is not limited by the embodiments of the present disclosure, as long as the indication information can indicate the target codeword in the codeword set that characterizes the channel information, so that the second node may accurately acquire the channel information of the first node according to the target codeword for precoding.

In S304, the second node determines the target codeword according to the indication information.

Herein, the indication information is used to indicate the target codeword in the codeword set that characterizes the channel information, and at least one codeword element of at least one codeword in the codeword set is determined according to the higher-degree polynomial of the index.

In some embodiments, the second node may acquire the indication information fed back by the first node, and determine the target codeword characterizing the channel information according to the indication information, so as to precode a signal before sending the signal to the first node. It should be noted that a specific way of determining the codeword may be determined according to a specific content of the indication information.

For example, if the indication information is a codeword index, the second node may directly select the target codeword based on the index from a pre-agreed codeword set according to the codeword index. If the indication information is codeword generation information, the second node may determine the target codeword based on the agreed codeword generation model according to the generation information. As for the detailed description, reference may be made to the above-described S302, which will not be repeated herein.

In the channel information feedback method provided in the embodiments of the present disclosure, the first node, after acquiring the channel information, determines a matching codeword from the codeword set and feeds the codeword back to the second node. Herein, at least one codeword element of at least one codeword in the codeword set is determined according to the higher-degree polynomial of the antenna index. By using the higher-degree polynomial to construct the codeword element, in the scenario of near-field UE, the relationship between the phase of the codeword element and the antenna index may be accurately reflected, thus a high correlation between the codeword and the channel information is ensured, and further, accurate feedback of the channel information in the scenario of near-field UE is realized.

It can be understood that, in order to achieve the above functions, the channel information feedback apparatus (which may be the first node or the second node described above) includes corresponding hardware structures and/or software modules for implementing various functions. A person skilled in the art will be easy to conceive that algorithm steps of the examples described in combination with the embodiments of the present disclosure may be implemented via a hardware or a combination of a hardware and a computer software in the present disclosure. Whether a certain function is performed via the hardware or the computer software-driven hardware depends on the specific application and restrictive conditions on design of the technical solution. A skilled person may use different methods for each specific application to implement the described functions, but such implementation should not be considered beyond the scope of the present disclosure.

Embodiments of the present disclosure may divide the channel information feedback apparatus into functional modules according to the above-described method embodiments. For example, each functional module may be divided corresponding to each function, or two or more functions may be integrated in a single functional module. The integrated module may be implemented in the form of hardware, or may be implemented in the form of software. It should be noted that, the division of modules in the embodiments of the present disclosure is schematic, and is only a division according to logical functions, and there may be other division manners in actual implementation. Descriptions will be made below by taking an example where each functional module is divided corresponding to each function.

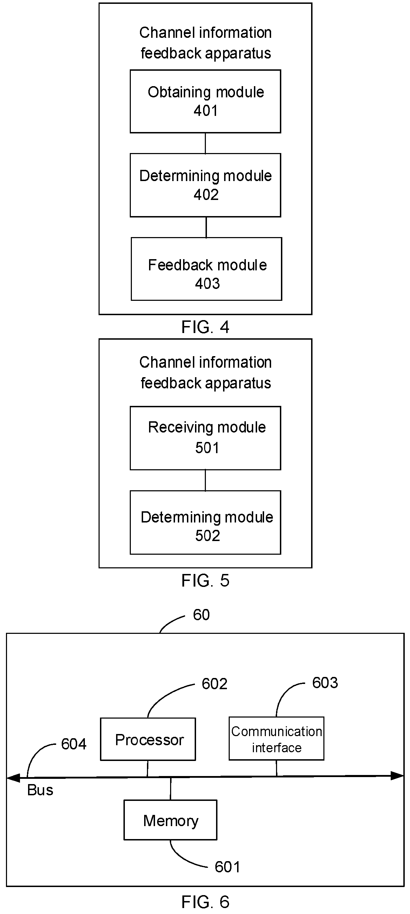

FIG. 4 is a schematic structural diagram of a channel information feedback apparatus provided by the embodiments of the present disclosure, where the channel information feedback apparatus may execute the channel information feedback method provided in the above method embodiments. As shown in FIG. 4, the channel information feedback apparatus includes an acquiring module 401, a determining module 402 and a feedback module 403.

The acquiring module 401 is configured to perform channel measurement to acquire channel information.

The determining module 402 is configured to determine a target codeword from a codeword set according to channel information, where at least one codeword element of at least one codeword in the codeword set is determined according to a higher-degree polynomial of an index, and the target codeword is used to characterize the channel information.

The feedback module 403 is configured to feed back indication information of the target codeword.

In some embodiments, the higher-degree polynomial of the index includes a linear monomial of the index and a quadratic monomial of the index.

In some embodiments, the higher-degree polynomial of the index includes a linear monomial of the index, a quadratic monomial of the index, and a cubic monomial of the index.

In some embodiments, the index includes a first index and/or a second index.

In some embodiments, the higher-degree polynomial of the index includes: a higher-degree monomial constructed by the first index and the second index.

FIG. 5 is a schematic structural diagram of another channel information feedback apparatus provided by the embodiments of the present disclosure, where the channel information feedback apparatus may execute the channel information feedback method provided in the above method embodiments. As shown in FIG. 5, the channel information feedback apparatus includes: a receiving module 501 and a determining module 502.

The receiving module 501 is configured to receive indication information; the indication information is used to indicate a target codeword in a codeword set that characterizes channel information, and at least one codeword element of at least one codeword in the codeword set is determined according to a higher-degree polynomial of an index.

The determining module 502 is configured to determine the target codeword according to the indication information.

In a case where a function of the above integrated module is implemented by adopting a form of hardware, the embodiments of the present disclosure provide another possible structure of the communication apparatus involved in the above embodiments. As shown in FIG. 6, the communication apparatus 60 includes a processor 602 and a bus 604. Optionally, the communication apparatus may further include a memory 601; and optionally, the communication apparatus may further include a communication interface 603.

The processor 602 may implement or execute various illustrative logical blocks, modules and circuits described in conjunction with the embodiments of the present disclosure. The processor 602 may be a central processing processor, a general-purpose processor, a digital signal processor, an application specific integrated circuit, a field programmable gate array or any other programmable logic device, a transistor logic device, a hardware component, or any combination thereof. The processor 602 can implement or execute the various exemplary logical blocks, modules and circuits described in connection with the embodiments of the present disclosure. The processor 602 may also be a combination capable of implementing computing functions, for example, a combination of one or more microprocessors, or a combination of a digital signal processor (DSP) and a microprocessor.

The communication interface 603 is configured to connect with other devices through a communication network. The communication network may be an Ethernet, a wireless access network, a wireless local area network (WLAN), or the like.

The memory 601 may be, but is not limited to, a read-only memory (ROM) or a static storage device of any other type capable of storing static information and instructions, a random access memory (RAM) or a dynamic storage device of any other type capable of storing information and instructions, or an electrically erasable programmable read-only memory (EEPROM), a magnetic disk storage medium or any other magnetic disk storage device, or any other media capable of being used to carry or store desired program codes and capable of being accessed by a computer, where the desired program codes have instructions or are in the form of data structure.

As a possible implementation, the memory 601 may exist independently of the processor 602, and the memory 601 may be connected to the processor 602 through the bus 604, and is used for storing instructions or program codes. When calling and executing the instructions or program codes stored in the memory 601, the processor 602 may implement the channel information feedback method provided in the embodiments of the present disclosure.

In another possible implementation, the memory 601 may be integrated with the processor 602.

The bus 604 may be an extended industry standard architecture (EISA) bus or the like. Buses 604 may be categorized into address buses, data buses, and control buses. For convenience of illustration, one thick line is used to represent the bus in FIG. 6, which however does not mean that there is only one bus or one type of bus.

Some embodiments of the present disclosure provide a computer readable storage medium (e.g., a non-transitory computer readable storage medium) having stored computer program instructions that, upon being executed by a computer, enable the computer to execute the channel information feedback method as described in any of the above embodiments.

For example, the computer readable storage medium may include, but is not limited to a magnetic storage device (e.g., a hard disk, a floppy disk or a magnetic tape), an optical disk (e.g., a compact disk (CD) or a digital versatile disk (DVD)), a smart card and a flash memory device (e.g., an erasable programmable read-only memory (EPROM), a card, a stick or a key driver). The various computer readable storage media described in the present disclosure may represent one or more devices and/or other machine-readable storage media for storing information. The term "machine-readable storage medium" may include, but is not limited to, wireless channels and various other media capable of storing, containing, and/or carrying instructions and/or data.

The embodiments of the present disclosure provide a computer program product including instructions, and the computer program product, upon being run on a computer, enable the computer to execute the channel information feedback method described in any of the above embodiments.

The above are only specific implementations of the present disclosure, but the scope of protection of the present disclosure is not limited thereto, and any person skilled in the art may conceive of variations or replacements within the technical scope of the present disclosure, which shall fall within the protection scope of the present disclosure. Therefore, the protection scope of the present disclosure shall be subject to the protection scope of the claims.

**Claims**

1. A channel information feedback method, **characterized by** comprising:

   performing channel measurement to acquire channel information;
   determining a target codeword from a codeword set according to the channel information, wherein at least one codeword element of at least one codeword in the codeword set is determined according to a higher-degree polynomial of an index, and the target codeword is used to characterize the channel information; and
   feeding back indication information of the target codeword.

2. The method according to claim 1, wherein the higher-degree polynomial of the index comprises a linear monomial of the index and a quadratic monomial of the index.

3. The method according to claim 1, wherein the higher-degree polynomial of the index comprises a linear monomial of the index, a quadratic monomial of the index, and a cubic monomial of the index.

4. The method according to any one of claims 1 to 3, wherein the index comprises a first index and/or a second index.

5. The method according to claim 4, wherein the higher-degree polynomial of the index comprises a higher-degree monomial constructed by the first index and the second index.

6. A channel information feedback method, **characterized by** comprising:

   receiving indication information, wherein the indication information is used to indicate a target codeword in a codeword set and characterizing the channel information, and at least one codeword element of at least one codeword in the codeword set is determined according to a higher-degree polynomial of an index; and
   determining the target codeword according to the indication information.

7. A communication apparatus, **characterized by** comprising: a processor and a memory for storing instructions executable by the processor;
   wherein the processor is configured to execute the instructions to cause the communication apparatus to perform the channel information feedback method according to any one of claims 1 to 5.

8. A communication apparatus, **characterized by** comprising: a processor and a memory for storing instructions executable by the processor;
   wherein the processor is configured to execute the instructions to enable the communication apparatus to perform the channel information feedback method according to claim 6.

9. A computer readable storage medium, wherein the computer readable storage medium stores computer instructions that, upon being run on a communication apparatus, enable the communication apparatus to execute the channel information feedback method according to any one of claims 1 to 6.

FIG. 1

Base station          User equipment

FIG. 2

First node

Second node

S301. Perform channel measurement to obtain channel information

S302. According to the channel information, determine a target code word from a code word set

S303. Feed back indication information of the target code word

S304. According to the indication information, determine the target code word

FIG. 3

Channel information
feedback apparatus

Obtaining module
401

Determining module
402

Feedback module
403

FIG. 4

Channel information
feedback apparatus

Receiving module
501

Determining module
502

FIG. 5

60

602

603

604

Processor

Communication
interface

Bus

Memory

601

FIG. 6

## INTERNATIONAL SEARCH REPORT

| | International application No. |
|---|---|
| | **PCT/CN2023/134450** |

| A. | CLASSIFICATION OF SUBJECT MATTER |
|---|---|
| | H04B 7/0456(2017.01)i |

According to International Patent Classification (IPC) or to both national classification and IPC

| B. | FIELDS SEARCHED |
|---|---|

Minimum documentation searched (classification system followed by classification symbols)

IPC:H04B7/-

Documentation searched other than minimum documentation to the extent that such documents are included in the fields searched

Electronic data base consulted during the international search (name of data base and, where practicable, search terms used)

CNABS, CNTXT, CJFD, CNKI, 万方, WANFANG, VEN, ENTXT, 3GPP, IEEE: 信道, 预编码矩阵, 码本, 码字, 码书, 配置, 设计, 多项式, 高次, 高阶, 近场, 近距离, 近域, 索引, channel, PMI, codebook, codeword, configuration, design, polynomial, higher orders, near field, index

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 109845126 A (TELEFONAKTIEBOLAGET LM ERICSSON (PUBL)) 04 June 2019 (2019-06-04) description, paragraphs 0016-0300 | 1-9 |
| A | CN 110999222 A (MEDIATEK INC.) 10 April 2020 (2020-04-10) entire document | 1-9 |
| A | CN 114337742 A (SUN YAT-SEN UNIVERSITY) 12 April 2022 (2022-04-12) entire document | 1-9 |
| A | CN 111555784 A (BEIJING UNIVERSITY OF POSTS AND TELECOMMUNICATIONS) 18 August 2020 (2020-08-18) entire document | 1-9 |
| A | US 2017373745 A1 (LG ELECTRONICS INC.; SOGANG UNIVERSITY RESEARCH FOUNDATION) 28 December 2017 (2017-12-28) entire document | 1-9 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 December 2023** | **19 December 2023** |

| Name and mailing address of the ISA/CN | Authorized officer |
|---|---|
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/134450** |

### C.    DOCUMENTS CONSIDERED TO BE RELEVANT

| Category* | Citation of document, with indication, where appropriate, of the relevant passages | Relevant to claim No. |
|---|---|---|
| A | WEI, Xiuhong et al. "Codebook Design and Beam Training for Extremely Large-Scale RIS: Far-Field or Near-Field?" *China Communications,* 28 June 2022 (2022-06-28), entire document | 1-9 |

Form PCT/ISA/210 (second sheet) (July 2022)

## INTERNATIONAL SEARCH REPORT
### Information on patent family members

| International application No. |
|---|
| **PCT/CN2023/134450** |

| Patent document cited in search report | | | Publication date (day/month/year) | Patent family member(s) | | | Publication date (day/month/year) |
|---|---|---|---|---|---|---|---|
| CN | 109845126 | A | 04 June 2019 | RU | 2713444 | C1 | 05 February 2020 |
| | | | | ES | 2841781 | T3 | 09 July 2021 |
| | | | | US | 2018262246 | A1 | 13 September 2018 |
| | | | | US | 10484059 | B2 | 19 November 2019 |
| | | | | DK | 3754863 | T3 | 21 November 2022 |
| | | | | KR | 20210049202 | A | 04 May 2021 |
| | | | | KR | 102376307 | B1 | 01 April 2022 |
| | | | | EP | 3497808 | A2 | 19 June 2019 |
| | | | | EP | 3497808 | B1 | 07 October 2020 |
| | | | | JP | 2019533916 | A | 21 November 2019 |
| | | | | JP | 6920416 | B2 | 18 August 2021 |
| | | | | BR | 112019002821 | A2 | 16 July 2019 |
| | | | | EP | 4187804 | A1 | 31 May 2023 |
| | | | | US | 2020036418 | A1 | 30 January 2020 |
| | | | | US | 10998949 | B2 | 04 May 2021 |
| | | | | EP | 3754863 | A1 | 23 December 2020 |
| | | | | EP | 3754863 | B1 | 02 November 2022 |
| | | | | JP | 2021073757 | A | 13 May 2021 |
| | | | | JP | 7175955 | B2 | 21 November 2022 |
| | | | | ES | 2937399 | T3 | 28 March 2023 |
| | | | | US | 2021105050 | A1 | 08 April 2021 |
| | | | | US | 11569879 | B2 | 31 January 2023 |
| | | | | JP | 2021184615 | A | 02 December 2021 |
| | | | | JP | 7336489 | B2 | 31 August 2023 |
| | | | | WO | 2018029645 | A2 | 15 February 2018 |
| | | | | WO | 2018029645 | A3 | 29 March 2018 |
| | | | | RU | 2020100455 | A | 02 March 2020 |
| | | | | RU | 2020100455 | A3 | 24 November 2021 |
| | | | | RU | 2765573 | C2 | 01 February 2022 |
| | | | | KR | 20190040003 | A | 16 April 2019 |
| | | | | KR | 102247005 | B1 | 30 April 2021 |
| | | | | PL | 3754863 | T3 | 13 March 2023 |
| | | | | IN | 201937004357 | A | 15 March 2019 |
| | | | | VN | 63556A | A | 27 May 2019 |
| | | | | HK | 40003194A0 | A0 | 09 April 2020 |
| | | | | HK | 40003194 | A1 | 23 December 2022 |
| | | | | CN | 109845126 | B | 15 March 2022 |
| | | | | IN | 202138021233 | A | 25 June 2021 |
| | | | | TR | 202021355 | T4 | 21 January 2021 |
| CN | 110999222 | A | 10 April 2020 | US | 2019326965 | A1 | 24 October 2019 |
| | | | | WO | 2018228594 | A1 | 20 December 2018 |
| | | | | US | 2018367197 | A1 | 20 December 2018 |
| | | | | TW | 201906450 | A | 01 February 2019 |
| | | | | TWI | 672962 | B | 21 September 2019 |
| | | | | CN | 110999222 | B | 31 January 2023 |
| CN | 114337742 | A | 12 April 2022 | CN | 114337742 | B | 22 September 2023 |
| CN | 111555784 | A | 18 August 2020 | CN | 111555784 | B | 22 October 2021 |
| US | 2017373745 | A1 | 28 December 2017 | US | 10142004 | B2 | 27 November 2018 |
| | | | | WO | 2016108482 | A1 | 07 July 2016 |

Form PCT/ISA/210 (patent family annex) (July 2022)

17

**REFERENCES CITED IN THE DESCRIPTION**

**Patent documents cited in the description**

- CN 202211695332